(19) Europäisches Patentamt
European Patent Office
Office européen des brevets

(11) **EP 4 194 738 A1**

(12) **EUROPEAN PATENT APPLICATION**

(43) Date of publication:
**14.06.2023 Bulletin 2023/24**

(21) Application number: **21213789.7**

(22) Date of filing: **10.12.2021**

(51) International Patent Classification (IPC):
**F17D 3/14** $^{(2006.01)}$

(52) Cooperative Patent Classification (CPC):
**F17D 3/14**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S**
**7330 Brande (DK)**

(72) Inventor: **Hoegh, Gustav**
**7100 Vejle (DK)**

(74) Representative: **SGRE-Association
Siemens Gamesa Renewable
Energy GmbH & Co KG
Schlierseestraße 28
81539 München (DE)**

(54) **GAS EXPORT ASSEMBLY**

(57) The invention describes a gas export assembly (1) comprising a gas production facility (10) adapted to generate pressurized gas ($G_{10}$) for export to a remote facility (4) through a pipeline (2); a means of determining an upper humidity threshold ($\phi_c$) for the export gas in the pipeline (2); a means of determining, on the basis of the upper humidity threshold ($\phi_c$), a pipeline inlet humidity ($\phi_{in}$) for the export gas, which pipeline inlet humidity ($\phi_{in}$) is lower than the upper humidity threshold ($\phi_c$); and a regulator stage (11, 12) adapted to adjust the humidity of the export gas ($G_{12}$) to the pipeline inlet humidity ($\phi_{in}$).

FIG 1

EP 4 194 738 A1

**Description**

Background

Wind energy can be used to drive large-scale electrolysis units in order to generate "green" hydrogen gas. The hydrogen gas can then be transported via pipeline to its destination, for example an offshore wind energy plant can export hydrogen through a pipeline to an onshore facility.

Hydrogen can be produced from electrolysis of water, with oxygen and heat as by-products. An offshore wind energy plant can drive a desalination unit to convert sea-water into water suitable for a water electrolysis system. There are several ways of performing water electrolysis, for example alkaline electrolysis using a suitable electrolyte. Alternatively, water can be split in a "proton exchange membrane" (PEM) electrolysis system that is based on a proton-permeable polymer membrane. PEM electrolysis has several advantages over the older techniques, for example it can achieve a favourably high power density and can be powered by an inherently fluctuating power supply such as wind energy. A high-pressure PEM electrolyzer can provide compressed hydrogen gas at a high temperature and pressure, for example a pressure in the order of 50 - 200 bar (5 MPa - 20 MPa) and a temperature of about 70°.

A gas produced by water electrolysis can have a high water vapour content, which must be removed before the gas is used for its ultimate purpose. Removal of the water vapour can be done at any stage between initial production and the final destination facility. Generally, some water vapour may be removed at an early stage, and the remainder can be removed prior to using the gas for its ultimate purpose. However, water vapour content may lead to problems when the gas is transported through a subsea pipeline from an offshore plant, since the water vapour can condense in the cold pipeline, ultimately reducing the available space in the pipeline and restricting the flow of hydrogen. If the pipeline follows the contour of a dip or valley in the seabed, the accumulated water condensate in such a "U-bend" reduces the flow rate and may even block the pipeline entirely. Therefore, before feeding it into the export pipeline, a gas containing water vapour should be at least partially dried in order to lower its water vapour content.

There are various possible ways of removing water vapour from gas, for example the gas can be passed through a drying tube filled with a suitable hygroscopic desiccant such as calcium chloride. However, owing to their relatively high cost, such techniques are unsuitable for large-scale drying of pressurized gas, for example hydrogen gas that is generated by a high-pressure PEM electrolyzer.

It is therefore an object of the invention to provide an improved way of treating gas for export through a subsea pipeline.

This object is achieved by the claimed gas export assembly and by the claimed method of operating a gas export assembly.

Description

According to the invention, the gas export assembly comprises a gas production facility adapted to generate pressurized gas for export to a remote facility through a pipeline. The gas export assembly further comprises a means of determining an upper humidity threshold for the export gas in the pipeline and a means of determining, on the basis of the upper humidity threshold, a pipeline inlet humidity for the export gas, which pipeline inlet humidity is lower than the upper humidity threshold. The gas export assembly further comprises a regulator stage adapted to adjust the humidity of the export gas to the pipeline inlet humidity. A combination of inlet temperature and inlet pressure is selected to ensure that the upper humidity level is not exceeded during transport of the gas through the pipeline, thereby significantly reducing or even eliminating the occurrence of water condensation in the pipeline.

The gas produced by the gas production facility shall be understood to comprise an amount of water vapour. In the context of the invention, the "upper humidity level" of the export gas in the pipeline shall be understood as the maximum relative humidity or the maximum absolute humidity of the gas, and shall be understood as the level above which water vapour would condense from the gas in the pipeline. The conditions along the interior of a pipeline are seldom constant, and different sections of the pipeline may have different pressures and temperatures. The invention is based on the insight that (usually) the lowest temperature inside the pipeline will determine primarily whether condensation of water vapour will occur, and to what extent, since the relative or absolute humidity will be highest in the coldest pipeline region.

An advantage of the inventive gas export assembly is that the regulator stage already treats the gas - prior to feeding it into the pipeline - to reach a temperature and pressure which together ensure that the relative or absolute humidity of the gas does not exceed the threshold determined for the coldest pipeline region.

According to the invention, the method of operating such a gas export assembly comprises the steps of determining an upper humidity threshold for the export gas in the pipeline and then determining, on the basis of the upper humidity threshold, a pipeline inlet humidity for the export gas, which pipeline inlet humidity is lower than the upper humidity threshold; and subsequently adjusting the humidity of the export gas to the pipeline inlet humidity. In a final step, the treated gas is fed into the pipeline.

An advantage of the inventive method is that with relatively little effort, the properties of the gas - prior to export - are set up in such a way as to avoid or eliminate undesirable condensation of water vapour in the pipeline. The inventive method ensures that the carrying capacity of the pipeline will not be reduced by an accumulation of liquid water, which would otherwise reduce the available volume inside the pipeline.

Particularly advantageous embodiments and features of the invention are given by the dependent claims, as revealed in the following description. Features of different claim categories may be combined as appropriate to give further embodiments not described herein.

In the following, it may be assumed that the gas export assembly is realised at an offshore facility and is powered by wind energy. For example, a wind farm can comprise multiple wind turbines to drive modules of a gas production facility. The gas can be transported to a remote facility such as an onshore treatment plant via a pipeline or network of pipelines. Specifically, an offshore facility can comprise a wind turbine mounted on a support structure, and an embodiment of the inventive gas export assembly, also supported by the support structure, and powered by the wind turbine. In the following, without restricting the invention in any way, it may be assumed that a gas production facility is a water electrolyzer, preferably a high-pressure PEM water electrolyzer assembly for the production of pressurized hydrogen gas.

For this reason, water vapour in the wet hydrogen gas generated by a high-pressure PEM electrolyzer will condense in the interior of a cold subsea pipeline. The temperature of the gas output by a high-pressure PEM electrolyzer can be in the order of 70°C - 100°C, for example, while the temperature along the pipeline might be very low in places, e.g. only a few degrees above 0°C.

The expression "humidity of a gas" refers to the concentration of water vapour in the gas. A "wet" or "non-dry" gas is any gas that contains some fraction of water vapour. The amount of water vapour that can be held by a gas depends on the temperature and pressure of the gas. A "cold" volume of gas can hold less water vapour that the same volume of gas at a higher temperature. The absolute humidity of the gas is the total mass of water vapour in a certain volume of the gas, and can be expressed as weight per volume, for example $g/cm^3$. The relative humidity of a wet gas compares the absolute humidity of the gas to its maximum humidity at a certain temperature and is the ratio of the actual quantity of water vapour in the gas to the quantity of water vapour that could be held by the gas at that temperature. Relative humidity is expressed as a percentage. The specific humidity of a volume of gas is the ratio of water vapour to the total gas mass. In the following, without restricting the invention in any way, the description refers to the relative humidity, but it shall be understood that the inventive method can equally well be performed using the absolute humidity as a basis for determining a favourable combination of inlet temperature and inlet pressure. Equally, the specific humidity may be used as a basis for determining a favourable combination of inlet temperature and inlet pressure.

To this end, the inventive gas export assembly comprises a means of determining the lowest temperature in the interior of the pipeline along a relevant length, for example between the inlet and outlet ends of that stretch of pipeline. The lowest temperature in the pipeline can be determined from a previously established temperature profile, for example. To this end, in a preferred embodiment of the invention, an initial calibration step is performed to collect temperature data in the interior of the pipeline over its length. For example a device such as a "pig", equipped with temperature sensors, can be made travel along the length of the pipeline at a suitable rate. The measured temperature readings are evaluated to establish the temperature profile for that pipeline.

Alternatively or in addition, the lowest temperature in the pipeline can be determined from ad hoc measurement data provided by suitably placed temperature sensors. This lowest temperature may occur anywhere along the pipeline, depending on the topography of the seabed, the length of the pipeline, the geographical location of the pipeline, etc. The ambient temperature may vary due to changing soil conditions, water depth etc. For this reason, different combinations of inlet temperature and inlet pressure may be identified for the pipelines of different gas export assemblies, even if the gas export assemblies are identical and the pipeline lengths are the same. The temperature along a pipeline will vary also on account of the heating effect of the infeed gas, in other words the gas entering the pipeline will lose heat to the pipeline.

The humidity of the export gas can reach a critical level owing to an unfavourable combination of temperature and pressure at some point along the pipeline. The region at which this unfavourable combination of parameters applies is not necessarily the coldest region in the pipeline, since relative humidity is determined by both temperature and pressure. Since temperature is usually the dominant factor, the following description assumes - without restricting the invention in any way - that the critical region in the pipeline is also the coldest region.

The inlet pressure is preferably determined on the basis of the lowest temperature in the pipeline, and also on the basis of a desired flow rate. A certain pressure differential between inlet and outlet of the pipeline will be required to ensure that the gas moves at a suitable rate through the pipeline.

From the lowest temperature in the pipeline and the corresponding pressure at that location, an upper threshold $\phi_c$ for the relative humidity of the export gas can then be chosen. For example, the upper relative humidity threshold $\phi_c$ may be set at a maximum of 90% in the critical region of the pipeline, i.e.

$$\phi_C\{T_C, P_C\} < 90\% \qquad\qquad (1)$$

From this, and with knowledge of the changes in temperature and pressure between pipeline inlet and the coldest pipeline region, a suitable level of relative humidity at the pipeline inlet can be determined such that equation (1) is satisfied over the entire pipeline.

The temperature and pressure of the gas to be fed into the pipeline can be manipulated in two ways in order to achieve this: the hot pressurized gas can be cooled, since cooling will result in condensation of water vapour; and the gas can be decompressed or expanded, since a decrease in pressure is associated with a decrease in relative humidity.

The temperature of the gas output by the PEM electrolyser is reduced as it passes through the cooling module, which can be a water-cooled or air-cooled heat exchanger that primarily serves to extract water vapour from the hot pressurized gas by condensation. In a preferred embodiment of the invention, the cooling module is a heat exchanger, and water vapour condenses from the gas as it passes over relatively cooler surfaces of the heat exchanger. At the output of the cooling module, the temperature of the gas has been reduced. The result of decreasing the temperature of the gas has the effect of raising its relative humidity. At the output of the cooling module, the relative humidity of the gas will be at or close to 100%.

In a subsequent stage, the pressure of the partially dried gas is lowered. To this end, the regulator stage of the inventive gas export assembly preferably comprises a pressure reducer adapted to reduce the pressure of the gas to the pipeline inlet pressure. For example, the pressure reducer can be realised as a pressure expansion valve or any other suitable apparatus. This step of pressure reduction is carried out to reduce the relative humidity of the gas to the desired inlet humidity level, which is below the upper humidity threshold $\phi_c$ as explained above. Preferably, the inlet relative humidity level is at most 70%, more preferably at most 50% of the upper humidity threshold $\phi_c$.

The partially dried, cooled and pressure-reduced gas is then fed into the export pipeline. Because of the controlled treatment prior to the infeed step, the reduced relative humidity of the partially dry gas ensures that, even when the gas reaches the coldest part of the pipeline, the remaining water vapour will not condense but will continue to the carried by the gas to the other end of the pipeline.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a block diagram of an embodiment of the inventive gas export assembly;

Figure 2 is a flowchart to illustrate the inventive method;

Figure 3 shows temperature, pressure and relative humidity at different stages in the inventive method;

Figure 4 illustrates the concepts applied by the inventive method.

In the diagrams, like numbers refer to like objects throughout. Objects in the diagrams are not necessarily drawn to scale.

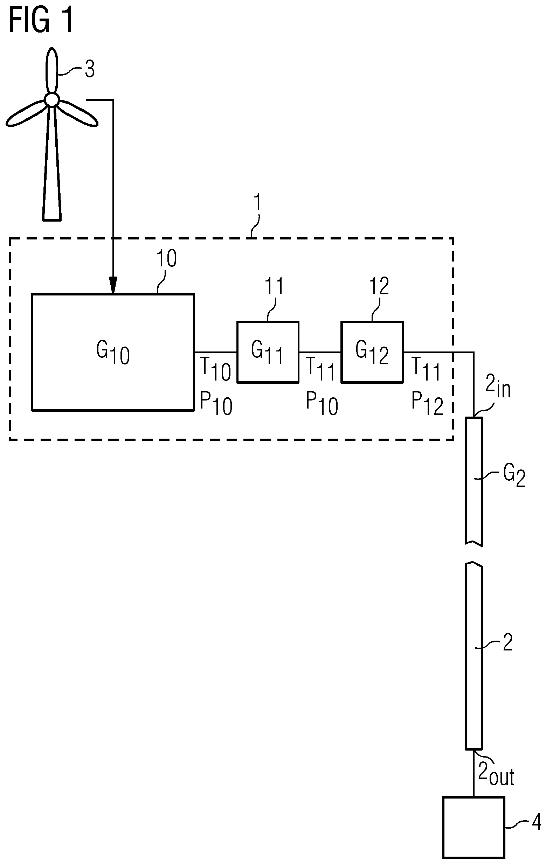

Figure 1 is a simplified block diagram of an embodiment of the inventive gas export assembly 1. The diagram shows a high-pressure PEM electrolyser 10, a heat exchanger 11, a pressure reducer 12 and an export pipeline 2. The gas export assembly 1 is implemented at an offshore location, and is powered by a wind turbine 41. The wind turbines of an offshore wind park can power many such high-pressure PEM electrolysers 10 to generate large quantities of "green" hydrogen $G_{10}$ at a favourably high purity. The coolant for the heat exchanger 11 may be cold seawater. The pipeline 2 between the wind turbine 41 and a destination facility 42 at a remote location may have a length of many kilometres.

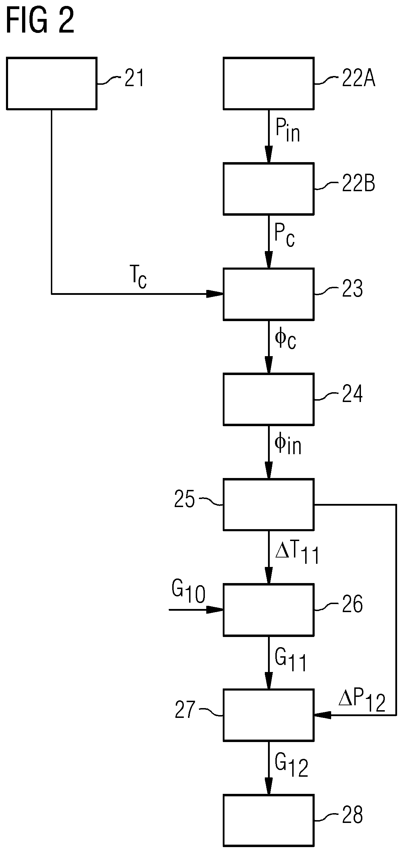

Figure 2 is a flowchart 20 to illustrate the inventive method. In a preparatory step 21, the lowest temperature $T_c$ in the pipeline is determined or estimated. This can be done using temperature sensing means as explained above. In another preparatory step 22A, the minimum inlet pressure $P_{in}$ is determined in order to achieve a satisfactory flow rate through that pipeline. This can be done using information regarding the dimensions of the pipeline, a required or desired flow rate, and a desired outlet pressure $P_{out}$. From the minimum inlet pressure $P_{in}$, the pressure $P_c$ at the coldest or "critical" pipeline region is estimated in step 22B.

From the lowest temperature $T_c$ and the corresponding pressure $P_c$, an upper threshold $\phi_c$ for the relative humidity of the export gas is determined in a subsequent step 23 as explained above regarding equation (1). From this, and with knowledge of the changes in temperature and pressure between pipeline inlet and the coldest pipeline region, a suitable level of relative humidity $\phi_{in}$ at the pipeline inlet $2_{in}$ is determined in step 24 such that equation (1) is satisfied over the entire pipeline.

The temperature and pressure of the gas to be fed into the pipeline 2 can be manipulated in two ways in order to achieve this: the hot pressurized gas can be cooled, since cooling will result in condensation of water vapour; and the gas can be decompressed or expanded, since a decrease in pressure is associated with a decrease in relative humidity.

The required minimum pressure $P_{in}$ at the pipeline inlet $2_{in}$ can be determined from a desired gas flow rate and the known pressure drop $\Delta P_2$ across the pipeline, i.e.

$$\Delta P_2 = P_{out} - P_{in} \qquad (2)$$

where $P_{out}$ is the desired pressure at the pipeline output $2_{out}$. Since the pressure drop across the cooling unit 11 may be assumed to be negligible, the required pressure drop $\Delta P_{12}$ across the pressure reducer 12 can be determined from

$$\Delta P_{12} = P_{10} - P_{in} \qquad (3)$$

In the inventive method, the pressurized wet gas $G_{10}$ originating from the gas production facility 10 is cooled in step 26. This step of cooling will result in condensation of water vapour, so that the gas $G_{11}$ output by the cooling unit 11 is partially dried and has been cooled to a suitable lower temperature $T_{11}$. The pressure drop across the cooling unit 11 may be assumed to be minimal.

Subsequently, the cooled (and partially dried) gas $G_{11}$ is decompressed in step 27 to reduce its pressure. The decompressor output pressure $P_{12}$ is essentially the pipeline inlet pressure $P_{in}$. Within the constraints of equation (3), the decompression stage 12 achieves a large pressure drop to obtain a favourably low relative humidity $\phi_{in}$ of the gas $G_{12}$ at the decompressor output, i.e. at the pipeline inlet $2_{in}$ such that

$$\phi_{in}\{T_{in}, P_{in}\} \ll \phi_C \qquad (4)$$

i.e. the relative humidity at the pipeline inlet is significantly lower than the critical relative humidity $\phi_c$ by a favourably large margin, bearing in mind that the temperature of the gas $G_2$ (in the pipeline as shown in Figure 1) will drop as it travels through the pipeline 2, reaching its lowest temperature at the critical region $2_c$. However, since the relative humidity of the gas at the pipeline inlet $2_{in}$ was deliberately reduced by the treatment stages 11, 12, the increase in relative humidity at the lower temperature $T_c$ and pressure $P_c$ at the pipeline critical region $2_c$ is such that the upper limit $\phi_c$ for relative humidity is not exceeded.

The temperature at the pipeline inlet $2_{in}$ can be at any level as long as equation (1) will apply over the length of the pipeline 2. The temperature of the inlet gas $G_{12}$ may be raised if desired, without affecting its relative humidity, since water vapour is not removed in a heating process.

Depending on various factors such as pipeline length, electrolyzer output temperature, etc., the temperature of the inlet gas G12 may affect the pipeline temperature profile. In such conditions, the cooling unit 11 may be regulated to cool its output gas G11 to suitable temperature $T_{11}$.

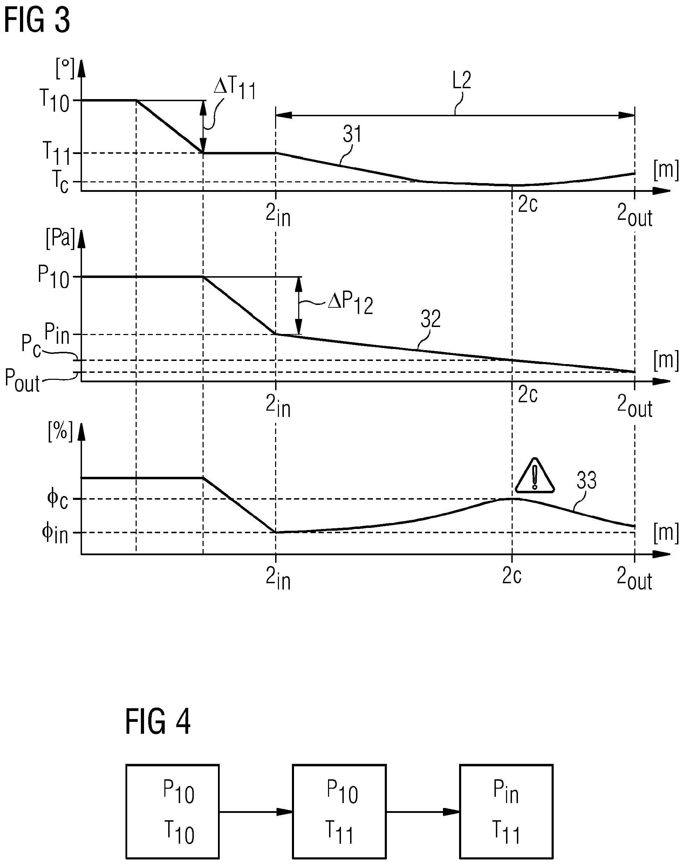

Figure 3 shows temperature, pressure and relative humidity at different stages in the inventive method as explained in Figure 1 and Figure 2. The uppermost part of the diagram shows the temperature profile 31 of hydrogen gas between its output from the gas production facility 10 through all stages of the inventive gas export assembly 1 and through the pipeline 2. To illustrate the effect of the inventive method, the X-axis represents distance. The pipeline 2 can have a length L2 of many kilometres.

In a first step 21, the lowest or "critical" temperature $T_c$ along the pipeline 2 is established. From the relationship between temperature, pressure and relative humidity, it can be established that the relative humidity of the export gas will be highest at this point $2_c$ along the pipeline. The invention is based on the insight that, by keeping the relative humidity below a certain threshold at this point $2_c$ along the pipeline, condensation of water vapour can be avoided. A suitable upper threshold $\phi_c$ of relative humidity for that pipeline region $2_c$ is then chosen, for example 90%.

A pressure profile 32 can be established from a known desired rate of gas transfer along the pipeline, i.e. a pressure differential can be identified to achieve a desired flow rate. Knowing the pressure $P_{out}$ of the export gas at the pipeline outlet, and knowing the pipeline length L2, the pressure $P_{in}$ at the pipeline inlet can be determined, for example by extrapolation. This allows the pressure $P_c$ at the critical region of the pipeline 2 to be determined in step 22B of the flowchart.

Using the known information about temperature and pressure profiles 31, 32 along the pipeline 2, and the established maximum relative humidity $\phi_c$ at that critical region $2_c$, a suitable relative humidity $\phi_{in}$ at the pipeline inlet $2_{in}$

is then determined as explained above in step 24. With this lower relative humidity $\phi_{in}$ as "target", a suitable temperature drop $\Delta T_{11}$ across the cooling unit 11 and a suitable pressure drop $\Delta P_{12}$ across the pressure reducer 12 are determined. These parameters are chosen to result in a reduced relative humidity $\phi_{in}$ at the pipeline inlet $2_{in}$, so that, by the time the export gas reaches the critical region $2_c$ of the pipeline, its relative humidity will not be able to increase above the identified threshold $\phi_c$.

With these criteria, the cooling and decompression steps 26, 27 can be performed to achieve the desired relative humidity $\phi_{in}$. For example, if the wind energy plant is located in the North Sea and the coolant is seawater at a temperature in the order of 10°C - 12°C, the temperature of the hydrogen gas $G_{10}$ can be reduced relatively quickly from an initial temperature $T_{10}$ in the order of 70° C to a lower temperature $T_{11}$ in the order of 10°C, thereby extracting a significant fraction of the water content from the gas $G_{10}$. The pressure of the gas $G_{11}$ at the output of the cooling unit 11 remains essentially unchanged. The pressure of the partially dried and cooled gas $G_{11}$ can be reduced from its initial pressure $P_{10}$ in the order of 6000000 Pa (60 bar) to a desired pipeline infeed pressure $P_{in}$ in the order of 3000000 Pa (30 bar). The temperature of the gas $G_{12}$ at the output of the decompression unit 12 remains essentially unchanged.

The combination of infeed temperature $T_{11}$ and infeed pressure $P_{in}$ ensure that the relative humidity of the export gas in the pipeline 2 will not rise above the upper threshold $\phi_c$ of relative humidity in the pipeline, so that even at the critical low-temperature in the pipeline 2, condensation of the residual water vapour will not occur.

Figure 4 illustrates the concepts applied by the inventive method. Initially, as indicated on the left, the high-pressure PEM electrolyzer outputs hydrogen $G_{10}$ at a high temperature $T_{10}$ and a high pressure $P_{10}$. During the temperature-reduction stage 11 of the regulator, the gas undergoes isobaric cooling during which the pressure $P_{10}$ remains essentially the same, but the temperature is reduced from the initial temperature $T_{10}$ to the inlet temperature $T_{11}$. During the pressure-reduction stage 12 of the regulator, the gas undergoes isothermal decompression during which the temperature $T_{11}$ remains essentially the same, but the pressure is decreased from the initial pressure $P_{10}$ to the inlet pressure $P_{in}$.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

**Claims**

1. A gas export assembly (1) comprising

   - a gas production facility (10) adapted to generate pressurized gas ($G_{10}$) for export to a remote facility (4) through a pipeline (2);
   - a means of determining an upper humidity threshold ($\phi_c$) for the export gas in the pipeline (2);

     - a means of determining, on the basis of the upper humidity threshold ($\phi_c$), a pipeline inlet humidity ($\phi_{in}$) for the export gas, which pipeline inlet humidity ($\phi_{in}$) is lower than the upper humidity threshold ($\phi_c$); and

   - a regulator stage (11, 12) adapted to adjust the humidity of the export gas ($G_{12}$) to the pipeline inlet humidity ($\phi_{in}$).

2. A gas export assembly according to the preceding claim, wherein the regulator stage comprises a cooling module (11) adapted to extract water vapour from the pressurized gas ($G_{10}$).

3. A gas export assembly according to any of the preceding claims, wherein the regulator stage comprises a pressure reducer (12) adapted to reduce the pressure of the cooled and partially dried gas ($G_{10}$).

4. A gas export assembly according to any of the preceding claims, comprising a means of determining the lowest temperature ($T_c$) in the interior of the pipeline (2) and a means of determining the pressure ($P_c$) in the interior of the pipeline (2) at that region of lowest temperature ($T_c$).

5. A gas export assembly according to the preceding claim, wherein the upper humidity threshold ($\phi_c$) is determined on the basis of the lowest temperature ($T_c$) and the associated pressure ($P_c$).

6. An offshore facility comprising

- a wind turbine (3); and
- a gas export assembly (1) according to any of claims 1 to 5 powered by the wind turbine (3).

7. An offshore facility according to claim 6, wherein the gas production facility (10) comprises a high-pressure PEM water electrolyzer assembly for the production of pressurized hydrogen gas ($G_{10}$).

8. A method of operating the gas export assembly (1) according to any of claims 1 to 5, which method comprises the steps of

   - determining an upper humidity threshold ($\phi_c$) for the export gas ($G_{12}$) in the pipeline (2);
   - determining, on the basis of the upper humidity threshold ($\phi_c$), a pipeline inlet humidity ($\phi_{in}$) for the export gas ($G_{12}$), which pipeline inlet humidity ($\phi_{in}$) is lower than the upper humidity threshold ($\phi_c$);
   - adjusting the humidity of the export gas ($G_{12}$) to the pipeline inlet humidity ($\phi_{in}$); and subsequently
   - feeding the gas ($G_{12}$) into the pipeline (2).

9. A method according to the preceding claim, wherein the pipeline inlet pressure ($P_{in}$) is determined on the basis of a desired outlet pressure ($P_{out}$).

10. A method according to any of the preceding method claims, wherein the regulator arrangement comprises a pressure reducer (12), and wherein a pressure drop ($\Delta P_{12}$) across the pressure reducer (12) is determined on the basis of the pipeline inlet pressure ($P_{in}$).

11. A method according to any of the preceding method claims, wherein a pipeline inlet temperature ($T_{in}$) is deduced at least on the basis of the pipeline inlet humidity ($\phi_{in}$).

12. A method according to any of the preceding method claims, comprising a step of determining a pressure profile (32) over the length (L2) of the pipeline (2).

13. A method according to any of the preceding method claims, comprising a step of determining a temperature profile (31) in the pipeline interior over the length (L2) of the pipeline (2).

14. A method according to any of the preceding method claims, comprising an initial calibration step (21) in which temperature data is collected in the interior of the pipeline (2) over its length (L2).

15. A method according to any of the preceding method claims, wherein the pipeline inlet humidity ($\phi_{in}$) comprises a relative humidity of at most 85%, more preferably at most 70%, more preferably at most 50%.

# FIG 1

# FIG 2

FIG 3

FIG 4

Europäisches
Patentamt
European
Patent Office
Office européen
des brevets

# EUROPEAN SEARCH REPORT

**Application Number**

EP 21 21 3789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 617 875 B1 (H TEC SYSTEMS GMBH [DE]) 17 September 2014 (2014-09-17) * paragraphs [0003], [0014], [0026]; figure 1 * | 1-15 | INV. F17D3/14 |
| X | US 2010/051473 A1 (OKABE MASANORI [JP] ET AL) 4 March 2010 (2010-03-04) * paragraphs [0024], [0037] – paragraph [0041]; figure 1 * | 1-15 | |
| X | US 2008/047502 A1 (MORSE ARTHUR P [US]) 28 February 2008 (2008-02-28) * paragraphs [0009], [0011] * | 1-15 | |
| A | US 2017/037720 A1 (MOORE RICHARD [AU]) 9 February 2017 (2017-02-09) * paragraphs [0001], [0090] * | 1-15 | |
| A | WO 2008/141784 A2 (UHDE GMBH [DE]; VON TROTHA THILO [DE] ET AL.) 27 November 2008 (2008-11-27) * page 1, line 6 – page 1, line 14 * | 1-15 | TECHNICAL FIELDS SEARCHED (IPC) |
| A | EP 2 377 972 B1 (GP JOULE HOLDING GMBH & CO KG [DE]) 5 March 2014 (2014-03-05) * paragraph [0012] * | 1-15 | F17D C25B |
| X | KR 2017 0026582 A (NUVERA FUEL CELLS LLC [US]) 8 March 2017 (2017-03-08) * paragraphs [0003], [0006], [0008] * | 1-15 | |

The present search report has been drawn up for all claims

| Place of search | Date of completion of the search | Examiner |
|---|---|---|
| Munich | 19 May 2022 | Forsberg, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 3789

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2022

| Patent document cited in search report | | Publication date | Patent family member(s) | | Publication date |
|---|---|---|---|---|---|
| EP 2617875 | B1 | 17-09-2014 | CA | 2860920 A1 | 25-07-2013 |
| | | | CN | 104053823 A | 17-09-2014 |
| | | | EP | 2617875 A1 | 24-07-2013 |
| | | | JP | 2015507703 A | 12-03-2015 |
| | | | KR | 20140113960 A | 25-09-2014 |
| | | | US | 2014377167 A1 | 25-12-2014 |
| | | | WO | 2013107591 A1 | 25-07-2013 |
| US 2010051473 | A1 | 04-03-2010 | JP | 5139924 B2 | 06-02-2013 |
| | | | JP | 2010053378 A | 11-03-2010 |
| | | | US | 2010051473 A1 | 04-03-2010 |
| US 2008047502 | A1 | 28-02-2008 | NONE | | |
| US 2017037720 | A1 | 09-02-2017 | AU | 2016303799 A1 | 22-02-2018 |
| | | | GB | 2556006 A | 16-05-2018 |
| | | | US | 2017037720 A1 | 09-02-2017 |
| | | | WO | 2017020096 A1 | 09-02-2017 |
| WO 2008141784 | A2 | 27-11-2008 | NONE | | |
| EP 2377972 | B1 | 05-03-2014 | CA | 2795351 A1 | 27-10-2011 |
| | | | CN | 102859042 A | 02-01-2013 |
| | | | EP | 2377972 A1 | 19-10-2011 |
| | | | JP | 2013525604 A | 20-06-2013 |
| | | | KR | 20130008049 A | 21-01-2013 |
| | | | PL | 2377972 T3 | 29-08-2014 |
| | | | US | 2013032472 A1 | 07-02-2013 |
| | | | WO | 2011131317 A1 | 27-10-2011 |
| KR 20170026582 | A | 08-03-2017 | AU | 2015284224 A1 | 02-02-2017 |
| | | | CA | 2953960 A1 | 07-01-2016 |
| | | | EP | 3164357 A1 | 10-05-2017 |
| | | | EP | 3674262 A1 | 01-07-2020 |
| | | | ES | 2769830 T3 | 29-06-2020 |
| | | | JP | 6473221 B2 | 20-02-2019 |
| | | | JP | 2017530921 A | 19-10-2017 |
| | | | KR | 20170026582 A | 08-03-2017 |
| | | | US | 2016001215 A1 | 07-01-2016 |
| | | | WO | 2016004036 A1 | 07-01-2016 |

EPO FORM P0459

For more details about this annex : see Official Journal of the European Patent Office, No. 12/82